# EUROPEAN PATENT APPLICATION

(11) **EP 2 549 747 A1**
(43) Date of publication of application: **23.01.2013**
(21) Application number: 12161793.0
(22) Date of filing: 28.03.2012
(51) Int. Cl.: H04N 5/775, H04N 21/472

(54) **Image processing apparatus and control method thereof**

(30) Priority: 20.07.2011 KR 20110071964
(71) Applicant: Samsung Electronics Co., Ltd., Suwon-si, Gyeonggi-do, 443-742 (KR)
(72) Inventor: Lee, Su-myoung, Gyeonggi-do (KR); Park, Sang-shin, Seoul (KR)
(74) Representative: Hancox, Jonathan Christopher

(57) **Abstract**

An image processing apparatus and a control method thereof are provided. The image processing apparatus 1 includes: a signal receiver 100 which receives a broadcasting signal 10 including first and second contents; a signal processor 200 which processes the broadcasting signal received by the signal receiver 100; a storage unit 300; and a controller 400 which receives the first and second contents of the processed broadcast signal from the signal processor 200 and stores in the storage unit 300 the first and second contents to be consecutively played, and consecutively plays the first and second contents in response to receiving a request for playing at least one of the first and second contents.

## Description

The present invention relates to an image processing apparatus and a control method thereof, and more particularly, embodiments relate to an image processing apparatus and a control method thereof which provides a recording function.

An image processing apparatus, i.e., a digital television (TV), a set-top box, a personal computer (PC), and a mobile terminal may receive a broadcasting signal from an external source and provide a user with broadcasting content displayed on a display apparatus. The image processing apparatus may perform an instant recording function or a reservation recording function for the content included in the received broadcasting signal and store such content inside or outside thereof. The content may be stored as a file.

The user of an image processing apparatus may want to use broadcasting content more conveniently. For example, in the case of broadcasting contents, i.e., shows and drama episodes, the user may want to watch several episodes of broadcasting contents consecutively. The user may also want to access a plurality of relevant broadcasting contents more easily and watch those contents altogether.

However, a related art image processing apparatus only enables the user to record broadcasting contents and edit the contents to be played consecutively, or split/combine contents and store the plurality of contents in a single file. In other words, in the case of the conventional image processing apparatus, after recording content, the user must edit broadcasting content by himself/herself after recording such content, causing inconvenience.

One or more exemplary embodiments provide an image processing apparatus and a control method thereof, which stores a plurality of broadcasting contents in a consecutively playable form in setting a recording function for a desired broadcasting content. One or more exemplary embodiments may be directed to accessing the broadcasting contents more conveniently.

One or more exemplary embodiments also provide an image processing apparatus and a control method thereof, which combines a plurality of broadcasting contents into a single file for storage without performing an additional editing process after recording such contents in setting a recording function for the broadcasting contents.

According to one aspect of the invention, there is provided an image processing apparatus which includes: a signal receiver which receives a broadcast signal including first and second contents; a signal processor which processes the broadcast signal received by the signal receiver; a storage unit; and a controller which receives the first and second contents of the processed broadcast signal from the signal processor and stores in the storage unit the first and second contents to be consecutively played, and consecutively plays the first and second contents in response to receiving a request for playing at least one of the first and second contents.

The first and second contents may be stored as a single file in the storage unit. The request for playing may include a request for playing the single file.

The first and second contents may be those selected by a user.

The first content may be stored prior to the second content.

The controller may include a user interface (UI) generator which provides a first UI for the user to select the first content, which is consecutively played together with the second content, and a second UI for the user to select playing the second content at a play time of the first content.

The selection of the first content may be performed at a time of receiving a broadcast signal of the second content.

The storage unit may store information of reservation recording set by the user, and the selection of the first content may be performed at a time when the user sets the reservation recording of the second content.

If the user selects the first and second contents while the broadcast signal including the first content is received, the first and second contents may be stored in the storage unit to be consecutively played.

The image processing apparatus may further include an image display unit which outputs the first and second contents, and outputs the first UI or the second UI, which is generated by the UI generator.

The signal processor may include an analog-to-digital converter which receives an analog broadcast signal from the signal receiver and converts the analog broadcast signal into a digital signal if the broadcast signal includes the analog broadcast signal.

The storage unit may be provided within the image processing apparatus.

According to another aspect of the invention, there is provided a control method of an image processing apparatus, the control method includes: receiving a broadcast signal including first and second contents; processing the broadcast signal; storing the first and second contents of the processed broadcast signal to be consecutively played; and consecutively playing the first and second contents in response to receiving a request for playing at least one of the first and second contents.

The first and second contents may be stored as a single file.

The request for playing may include a request for playing the single file.

The control method may further include selecting the first and second contents to be stored.

The first content may be stored prior to the second content.

The control method may further include selecting playing of the second content at a play time of the first content.

The selection of the first content may be performed at a time of receiving the broadcast signal of the second content.

The selection of the first content may be performed at a time when the user sets reservation recording of the second content.

If the user selects the first and second contents while the broadcast signal including the first content is received, the first and second contents may be stored to be consecutively played.

The control method may further include converting an analog broadcast signal into a digital signal if the broadcast signal includes the analog broadcast signal.

According to an aspect of another exemplary embodiment, there is provided a control method of an image processing apparatus, the control method includes: selecting first content through a user interface (UI); receiving a broadcast signal including second content; storing the first content and the second content of the broadcast signal to be consecutively played; and consecutively playing the first and second contents in response to receiving a request for playing at least one of the first and second contents.

The above and/or other aspects will become apparent and more readily appreciated from the following description of the exemplary embodiments, taken in conjunction with the accompanying drawings, in which:
FIG. 1 is a control block diagram of an image processing apparatus according to an exemplary embodiment;
FIG. 2A illustrates a user interface (UI) provided for a user to select a first content in the image processing apparatus in FIG. 1;
FIG. 2B illustrates a UI provided for a user to select a play time of a second content in the image processing apparatus in FIG. 1;
FIG. 3 illustrates a UI which displays a consecutively playable file of the first and second contents by the image processing apparatus in FIG. 1;
FIG. 4 illustrates an example of a control flowchart of the image processing apparatus in FIG. 1; and
FIG. 5 illustrates another example of a control flowchart of the image processing apparatus in FIG. 1.

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

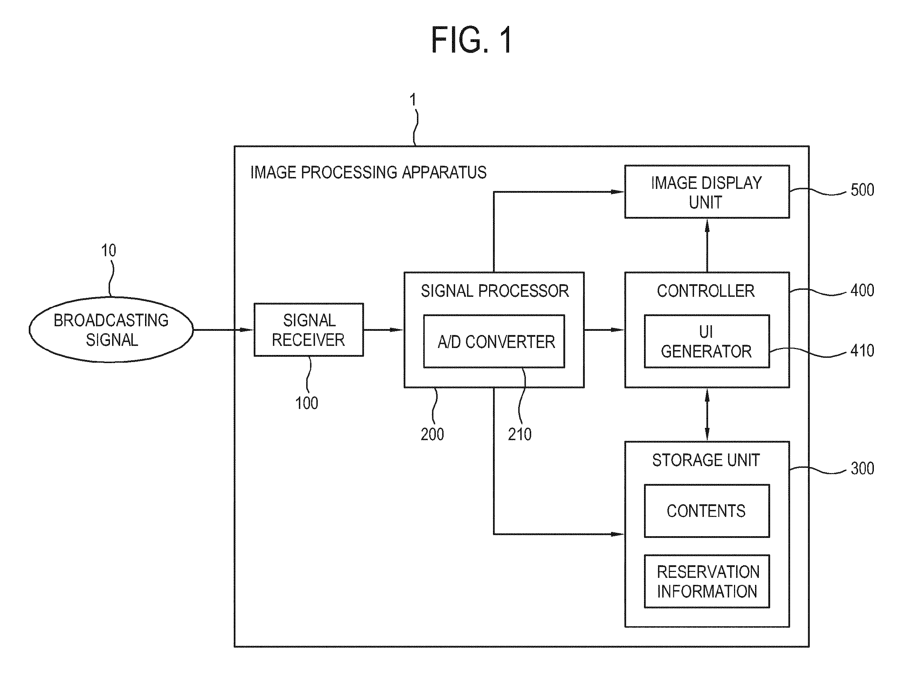

FIG. 1 is a control block diagram of an image processing apparatus according to an exemplary embodiment.

As shown in FIG. 1, an image processing apparatus 1 may include a signal receiver 100, a signal processor 200, a storage unit 300, a controller 400, and an image display unit 500. The image processing apparatus 1 may perform a recording function for a content included in a received broadcasting signal 10. The image processing apparatus 1 may include a digital TV, a set-top box, a PC, or a mobile terminal, but not limited thereto. Alternatively, the image processing apparatus 1 may include any device which receives a broadcasting signal 10 and has a recording function for the content included in the received broadcasting signal 10.

The signal receiver 100 receives the broadcasting signal 10 including the content. The broadcasting signal 10 may be transmitted in the form of a transport stream (TS) packet as a digital signal, or an analog signal. The signal receiver 100 may include a tuner to tune an input broadcasting signal 10, and a demodulator to demodulate a tuned signal.

The signal receiver 100 tunes a broadcasting signal 10 in a frequency band corresponding to a tuning control signal of the controller 400. The frequency band of the broadcasting signal 10 may correspond to one of a plurality of channels assigned by a broadcasting station.

The signal processor 200 receives the broadcasting signal 10 tuned by the signal receiver 100 and processes such broadcasting signal 10 into a displayable format and transmits the processed signal to the image display unit 500.

The signal processor 200 processes the content included in the broadcasting signal 10 to be stored in the storage unit 300 and transmits the processed content to the storage unit 300. The signal processor 200 may perform various signal processing operations corresponding to the broadcasting signal 10. The signal processing operations performed by the signal processor 200 may include decoding, image enhancing and scaling operations. If an input signal includes an analog signal, the signal processor 200 may include an analog/digital (A/D) converter 200 to convert the analog signal into a digital signal.

The storage unit 300 stores therein a content included in the broadcasting signal 10. The storage unit 300 may include a storage device, including a non-volatile memory, i.e., a hard disk drive (HDD) in the image processing apparatus 1. The storage device may also be outside of the image processing apparatus 1, i.e., a USB device. The storage unit 300 may store therein various information of a broadcasting signal other than a content file of the broadcasting signal.

If the received broadcasting signal 10 includes a digital signal, the content may be stored in the format of the received broadcasting signal 10. If the received broadcasting signal 10 includes an analog signal, the analog signal may be converted into a digital signal by the A/D converter 210 to be stored in the storage unit 300. As the analog signal is converted into a digital signal for storage, the content included in an analog broadcasting may also be stored to be played together with the content included in a digital broadcasting, or stored by being combined into a single file.

The storage unit 300 may store therein information of reservation recording set by the user (the "reservation information"), i.e., information of a content of a channel for which the user sets a reservation recording through a UI and recording time information.

The controller 400 controls overall operations of the image processing apparatus 1. The controller 400 may include a control program, a non-volatile memory (not shown), i.e., a read only memory (ROM) and a flash memory storing therein the control program, a volatile memory (not shown), i.e., a random access memory (RAM) loading at least a part of the stored control program, and a microprocessor (not shown), i.e., a central processing unit (CPU), and a micro control unit (MCUI) executing the loaded control program.

If a user sets a viewing channel and a recording channel, the controller 400 transmits a tuning control signal to the signal receiver 100 to tune and receive the broadcasting signal 10 of the set channel.

The controller 400 controls the storage unit 300 to store therein first and second contents of the broadcasting signal 10 to be consecutively played. The first content may include a content which is stored in the storage unit 300 prior to the recording of the second content. The second content may include a content included in the broadcasting signal 10 of a channel to be recorded through an instant recording or reservation recording function.

The controller 400 stores in the storage unit 300 the first and second contents, including information for playing the second content before or after a particular play time of the first content (the "consecutive play information ").

As an example of the consecutive play information included in the first and second contents, (i) the second content may be played prior to the start of playing the first content, (ii) the second content may be played consecutively with the completion of the first content, or (iii) the second content starts to be played after suspension of playing the first content at a particular play time of the first content. Then, the first content may be played again after the completion of playing the second content.

As a result, the user does not need to edit the first and second contents after recording the first and second contents. The first and second contents are stored to be consecutively played upon setting an instant recording or reservation recording. The above embodiments improve convenience for the user by allowing broadcasting contents to be viewed consecutively, without requiring the user to edit the broadcasting content.

Upon receiving the user's request for playing at least one of the first and second contents, the controller 400 controls the first and second contents stored in the storage unit 300 to be consecutively played. Upon receiving the user's request for playing one of the first and second contents, the second content is automatically played before or after a particular play time of the first content according to the consecutive play information.

The controller 400 may store in the storage unit 300 a single file with the combined first and second contents. The first and second contents may be combined to play the second content before the starting time of the first content, or to play the second content concurrently with the completion of the first content. Also, the first and second contents may be combined to play the second content after suspension of playing the first content from a particular play time of the first content. Then, the first content is played again after the completion of the second content. The file may be divided on the basis of before and after the particular play time of the first content and then combined with the second content to be a single file. The user's request for playing the first content or the second content may include a request for playing the combined single file.

As a result, if a user wants to combine a plurality of broadcasting contents into a single file when performing instant recording or setting a reservation recording for a desired broadcasting, he/she may not need to edit the contents after recording each of the contents. The user may set contents to be stored by combining the contents into a single file at the time of the instant recording or reservation recording.

The first and second contents may be those selected by the user. If the user inputs information of the first and second contents through the UI generated by the UI generator, the controller 400 may receive the information and store such information in the storage unit 300 together with the consecutive play information to consecutively play the first and second contents.

The controller 400 may further include a UI generator 410 which provides a first UI to select the first content to be consecutively played with the second content, and a second UI to select the second content played at the play time of the first content.

The UI may provide information of the content stored in the storage unit 300 and electronic program guide (EPG) information of a broadcasting signal and a program received through the image processing apparatus 1. A UI signal generated through the UI generator 410 is synthesized together with a currently processed broadcasting signal 10, and then displayed on the image display unit 500 or a display apparatus connected to the image processing apparatus 1. The displayed UI signal allows the user to select a content file and a broadcasting channel.

The selection of the first and second contents may be performed at various times. For example, the selection of the first content may be performed at the time of receiving the broadcasting signal 10 of the second content. If a user desires to instant-record the broadcasting signal 10 of the second content, he/she may select the first content through the UI and select the second content to be played at the play time of the first content so that the first and second contents are stored in the storage unit 300 to be played consecutively.

The selection of the first content may be performed at the time of setting a reservation recording of the second content. If the user inputs information of a channel and a time for which the reservation recording is set through the UI, the UI generator 410 may provide a UI for the user to select the first content which is stored to be consecutively played with the second content of the broadcasting signal 10 recorded through the reservation recording.

If the broadcasting signal 10 including the first content is being received at the time when the user wants to start the instant recording, the first and second contents may be stored in the storage unit 300 to be consecutively played. The user's selection of the first content may be included in the broadcasting signal 10 being received and the second content may be received through the broadcasting signal 10 of another channel.

The image processing apparatus 1 may further include the image display unit 500 to output the first and second contents stored in the storage unit 300, and to output a UI generated by the UI generator 410. Otherwise, an additional display apparatus connected to the image processing apparatus 1 may be provided to output the contents and UI.

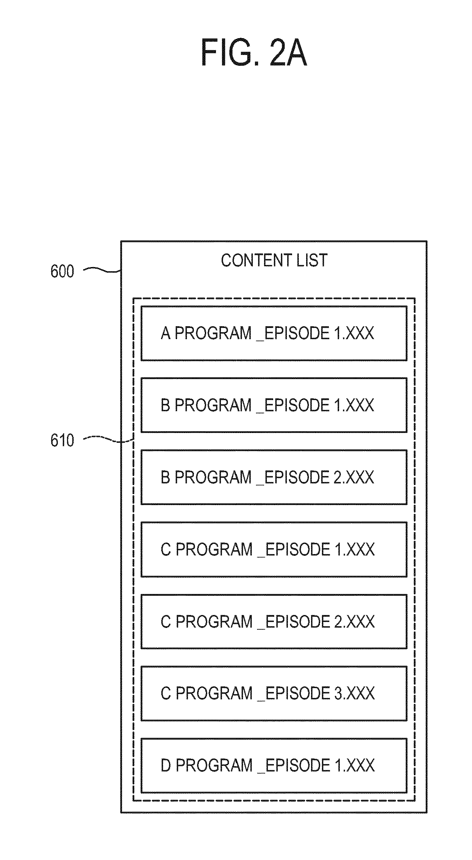

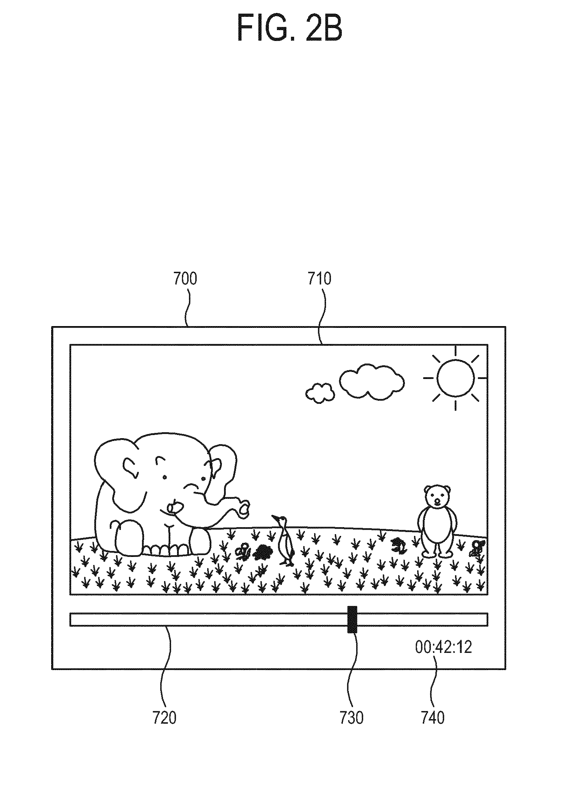

FIG. 2A illustrates a first UI which is provided for the user to select the first content through the image processing apparatus in FIG. 1. FIG. 2B illustrates a second UI which is provided for the user to select the second content to be played at a particular play time of the first content through the image processing apparatus in FIG. 1.

As shown in FIG. 2A, if a user desires to record a currently-viewing channel, a view 600 of a UI is provided to the user to select the first content output to the image display unit 500. The UI view displayed on the image display unit 500 displays a list 610 of a plurality of contents stored in the storage unit 300 in the inside or outside of the image processing apparatus 1. Then, the user may select the first content through the displayed UI view.

As shown in FIG. 2B, if the user selects the first content, the UI generator 410 generates and displays on the image display unit 500 a play time selection UI 700 to select the playing of the second content from a particular play time of the first content. The play time selection UI 700 displays a play view 710 and time bar 720 of the first content, a time selection button 730 moving on the time bar 720, and a play time 740 according to a location of the time selection button 730.

If the user moves the time selection button 730 on the time bar 720, the play time 740 changes accordingly. The play view 710 also changes according to the play time 740. If the user selects the play time of the first content through the time selection button 730, the first and second contents, including consecutive play information, are stored in the storage unit 300 to consecutively play the second content from the selected play time of the first content.

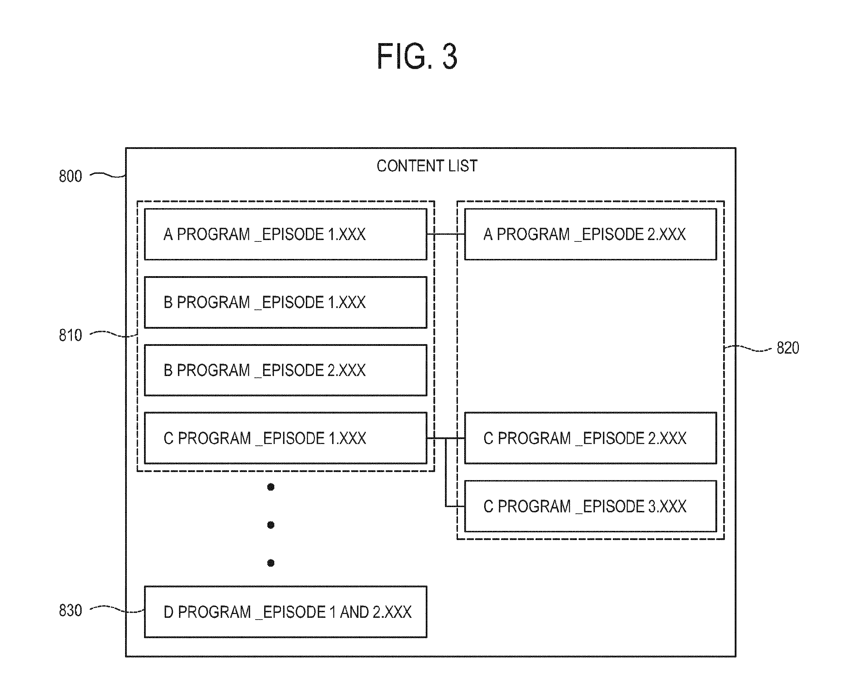

FIG. 3 illustrates a UI displaying a consecutively playable content by the image processing apparatus in FIG. 1.

If the user desires to play the first content and/or second content stored in the storage unit 300, the UI generator 410 generates a UI view 800 displaying a playable content on the image display unit 500. The UI view 800 displays information of a first content file 810 stored in the storage unit 300 and information of a second content file 820 stored in the storage unit 300. The second content file 820 is consecutively played together with the first content file 810. If the first and second contents are combined into a single file at the time of recording, and are stored as a single file in the storage unit 300, a combined single content file 830 is displayed.

If the user wants to play a single content file with respect to a plurality of contents through the UI, the selected content file and another content file, stored to be consecutively played together with the selected content file, are played consecutively on the image display unit 500.

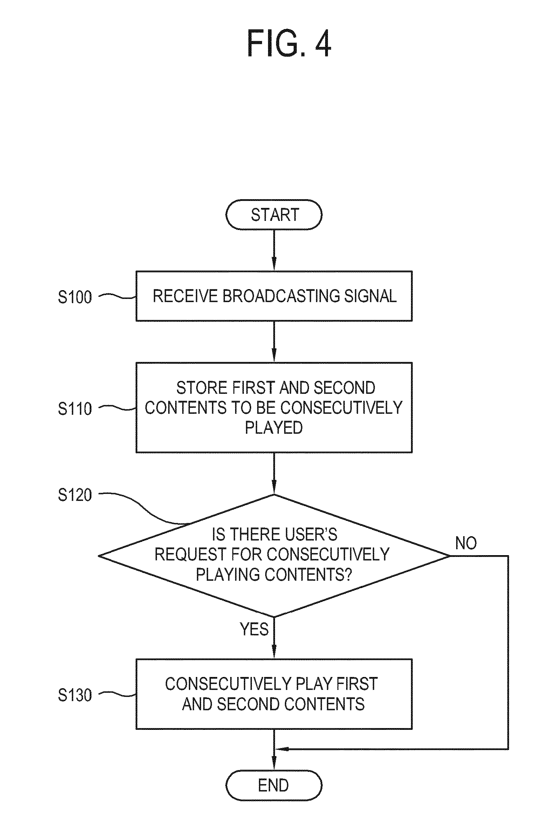

FIG. 4 illustrates an example of a control flowchart of the image processing apparatus in FIG. 1.

The image processing apparatus 1 receives the broadcasting signal 10 including a content from an external source (S100). The image processing apparatus 1 may tune, demodulate, decode, enhance image of, and scale the received broadcasting signal 10, and convert the broadcasting signal 10 into a storable form.

Then, the first and second contents of the broadcasting signal 10 are stored either in the inside of the image processing apparatus 1 or in a separate storage device connected to the image processing apparatus 1, to be consecutively played (S110).

The first content may include a content stored before the second content is recorded. The second content may include a content included in the broadcasting signal 10 the user desires to record. In this case, the image processing apparatus 1 stores the first and second contents by including consecutive play information in the first and second contents. As an example of including the consecutive play information in the first and second contents, (i) the second content may be played before the starting time of the first content, (ii) the second content may be played concurrently with the completion of the first content, or (iii) the playing of the first content is suspended at a particular playing time and the second content is played. Then, the first content may be played after playing of the second content is completed.

Then, the user may store the first and second contents in a consecutively playable form at the time of instant recording or setting the reservation recording. The first and second contents are not edited by the user after recording. The above embodiments improve convenience for the user by allowing broadcasting contents to be viewed consecutively, without requiring the user to edit the broadcasting content.

The image processing apparatus 1 may combine the first and second contents into a single file and store the single file. The first and second contents may be combined to play the second content before the play time of the first content, or to play the second content concurrently with the completion of the first content. To suspend playing of the first content from a particular play time to play the second content, and play the first content after the playing of the second content is completed, the file may be divided on the basis of before and after the particular play time. Then, the file may be combined with the second content into a single file.

If the user desires to combine a plurality of broadcasting contents into a single file for instant recording or setting reservation recording for a desired broadcasting, he/she may set contents at the time of instant recording or reservation recording. Setting contents at the time of instant recording or reservation recording will allow contents to be combined into a single file for storage. Thus, the user does not need to edit without the contents after recording each content.

If the user requests playing at least one of the first and second contents (S120), the image processing apparatus 1 automatically plays the second content before or after the particular play time of the first content according to the consecutive play information (S130). If the first and second contents are combined into a single file for storage, the user's request for playing the first or second content may include a request for playing the combined single file.

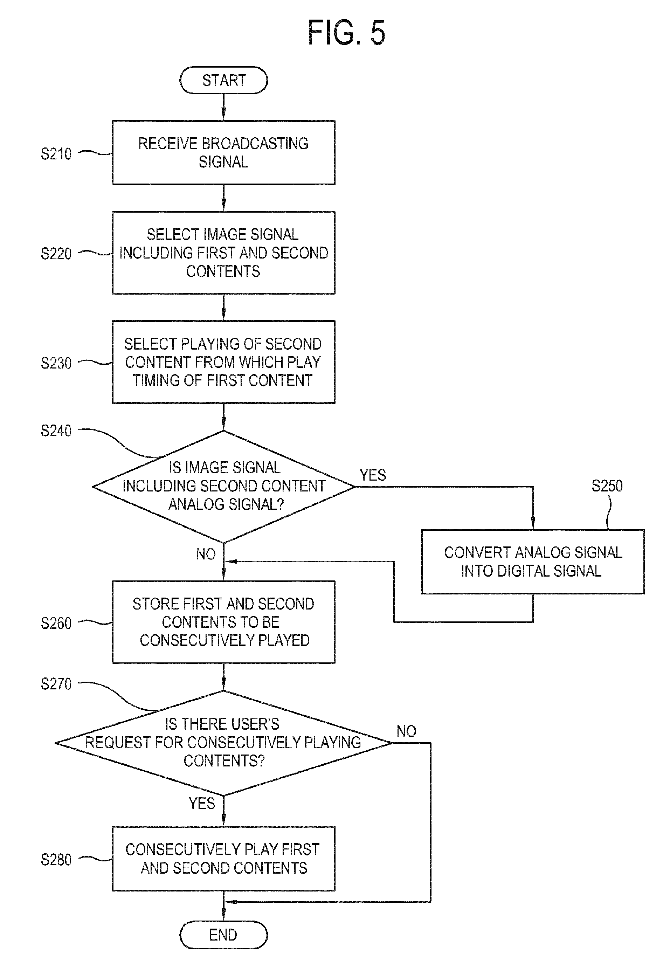

FIG. 5 illustrates another example of a control flowchart of the image processing apparatus 1 in FIG. 1.

The image processing apparatus 1 receives the broadcasting signal 10 including the content from the external source (S210). A user may select the broadcasting signal including the first and second contents through the UI to store such contents to be consecutively played (S220).

In this case, the selection of the first and second contents may be performed at various timings. For example, if the user desires to instant-record the second content included in the broadcasting signal 10 of the currently viewing channel, the selection of the first content may be performed at the time of receiving the broadcasting signal 10 of the second content. If the user wants to set the reservation recording for a particular channel, the selection of the first content may be performed at the time of setting the reservation recording for the second content.

If the user selects the broadcasting signal 10 including the first and second contents (S220), the user may select, through the UI, the second content to be stored and played at a play time of the first content (S230).

The broadcasting signal 10 received by the image processing apparatus 1 may be transmitted in the form of a TS package as a digital signal or an analog signal. The image processing apparatus 1 determines whether the broadcasting signal 10 including the second content is a digital signal or an analog signal (S240). If the broadcasting signal 10 is a digital signal, the image processing apparatus 1 may store the digital signal in its original format. If the broadcasting signal 10 is an analog signal, the image processing apparatus 1 may store the broadcasting signal 10 after converting it into a digital signal (S250).

The image processing apparatus 1 includes the consecutive play information in the first and second contents to be consecutively played, and stores the first and second contents in the image processing apparatus or an external storage device connected to the image processing apparatus 1 (S260). The first and second contents may be combined into a single file for storage.

Upon receiving a request from the user for consecutively playing one of the first and second contents (S270), the image processing apparatus 1 consecutively plays the first and second contents according to the consecutive play information (S280). If the first and second contents are combined and stored in a single file, the image processing apparatus 1 plays the combined file.

As described above, an image processing apparatus and a control method thereof according to exemplary embodiments stores a plurality of broadcasting contents in a consecutively playable form in setting a recording function for a desired broadcasting content and provides the broadcasting contents more conveniently.

Further, the image processing apparatus and a control method thereof according to exemplary embodiments combines a plurality of broadcasting contents into a single file for storage without performing an additional editing.

## Claims

1. An image processing apparatus comprising:
a signal receiver which receives a broadcast signal comprising first and second contents;
a storage unit; and
a controller which stores the first and second contents to be consecutively played in the storage unit, and consecutively plays the first and second contents in response to receiving a request for playing at least one of the first and second contents.

2. The image processing apparatus according to claim 1,
wherein the first and second contents are stored as a single file in the storage unit, and
wherein the request for playing comprises a request for playing the single file.

3. The image processing apparatus according to claim 1 or 2, wherein the first and second contents are those selected by a user.

4. The image processing apparatus according to any of the preceding claims, wherein the first content is stored prior to the second content.

5. The image processing apparatus according to any of the preceding claims, wherein the controller comprises a user interface (UI) generator which provides a first UI for the user to select the first content, which is consecutively played together with the second content, and a second UI for the user to select playing the second content at a play time of the first content.

6. The image processing apparatus according to claim 5, wherein the selection of the first content is performed at a time of receiving the broadcast signal of the second content.

7. The image processing apparatus according to claim 5, wherein the storage unit stores information of reservation recording set by the user, and the selection of the first content is performed at a time when the user sets the reservation recording of the second content.

8. The image processing apparatus according to claim 5, wherein if the user selects the first and second contents while the broadcast signal comprising the first content is received, the first and second contents are stored in the storage unit to be consecutively played.

9. The image processing apparatus according to any of the preceding claims, further comprising a signal processor which processes the broadcast signal received by the receiver, wherein the signal processor comprises an analog-to-digital converter which receives an analog broadcasting signal from the signal receiver and converts the analog broadcast signal into a digital signal if the broadcast signal comprises the analog broadcast signal.

10. A control method of an image processing apparatus , the control method comprising:
receiving a broadcast signal comprising first and second contents;
storing the first and second contents of the broadcast signal to be consecutively played; and
consecutively playing the first and second contents in response to receiving a request for playing at least one of the first and second contents.

11. The control method according to claim 10,
wherein the first and second contents are stored as a single file, and
wherein the request for playing comprises a request for playing the single file.

12. The control method according to claim 10 or 11, further comprising selecting the first and second contents to be stored; and

13. The control method according to claim 12, wherein the selection of the first content is performed at a time of receiving the broadcast signal of the second content.

14. The control method according to claim 12, wherein the selection of the first content is performed at a time when the user sets a reservation recording of the second content.

15. The control method according to claim 12, wherein if the user selects the first and second contents while the broadcast signal comprising the first content is received, the first and second contents are stored to be consecutively played.
